# EUROPEAN PATENT APPLICATION

(11) **EP 1 219 678 A1**
(43) Date of publication of application: **03.07.2002**
(21) Application number: 00128502.2
(22) Date of filing: 27.12.2000
(51) Int. Cl.: C08K 9/04, C08K 9/08

(54) **Use of a nanofiller-containing polyolefin composition for the production of improved articles**

(71) Applicant: Borealis GmbH, 2323 Schwechat-Mannswörth (AT)
(72) Inventor: The designation of the inventor has not yet been filed
(74) Representative: VA TECH Patente GmbH & Co

(57) **Abstract**

The invention refers to the use of a polymer material comprising a nanofiller containing polyolefin composition for the production of articles with an improved balance of mechanical, thermomechanical and optical properties.

## Description

The present invention refers to the use of a polymer material comprising a nanofiller containing polyolefin composition for the production of improved articles.

It is known that an addition of conventional fillers, e.g. talcum, to polyolefins leads to an increase of mechanical and thermomechanical properties. It is also known, that optical properties tend to worsen as a result of filler addition.

For some time new filler materials have been the object of intensive studies. The main difference between these new filler materials and conventional fillers is their particle size, which is in the nanometer range. These new filler materials are termed "nanofillers" and polymer compositions containing them "nanocomposites".
For this invention the term "nanofillers" refers to any filler or combination of fillers having at least one dimension (length, width or thickness) from about 1 to about 100 nm.
In most cases the nanofiller is an inorganic material:
- Intercalated and exfoliated (delaminated) clays (layered silicates)
- Conventional fillers, e.g. calcium carbonate, with minimum dimensions
- Nanowhiskers, e.g. SiC.
- Silica (SiO₂)
- Specialities, e.g. carbon nanotubes.

The present invention deals with the use of intercalated and exfoliated clays as nanofillers.

The mode of action of clay-based nanofillers is due to their extremely high aspect ratio. The starting clay materials are layered structures. When incorporated in a polymer matrix (after chemical treatment and intercalation in order to be made organophilic), exfoliation and delamination occurs, which - in an idealized case - leads to individual platelets with thicknesses of about 1 nm which are dispersed in the polymer.

It is known to use such clay nanofillers in polar polymers (e.g. US-A-6,034,164). A polyolefin/clay -nanocomposite is somewhat more difficult to make than one based on polar polymers.

However, Kawasumi *et al.* (M. Kawasumi, N. Hasegawa, M. Kato, A. Usuki and A. Okada, "Preparation and mechanical properties of polypropylene-clay hybrids", *Macromolecules,* 30, 6333 (1997)) from Toyota have published one approach that can be summarized as follows:
- Montmorillonite (Mt) was intercalated with stearyl ammonium ions (C18) in solution → C18-Mt.
- PP, PP-*g*-MA (compatibilizer), and C18-Mt were mixed in a twin-screw extruder (MA = maleic acid anhydride.

In order to achieve exfoliation and good dispersion of the platelets it is necessary to add a compatibilizer (maleic anhydride grafted polypropylene in the above procedure) to the composition. It is however also known, that the addition of compatibilizer counteracts the effect of nanofiller addition, especially concerning mechanical properties.

There exists a continuing demand for polyolefin based finished and semi-finished products with an improved balance of mechanical, thermomechanical and optical properties for engineering applications, e.g. automotive parts.

It is therefore the object of the present invention to provide articles produced from a polymer material comprising a nanofiller-containing polyolefin composition with an improved balance of mechanical, thermomechanical and optical properties.

Surprisingly it was possible to achieve the above object by using a polymer material comprising a polyolefin composition which is comprised of
90-95 wt% of a semicrystalline polyolefin with and MFR of from 1 to 10
2-4 wt% of a maleic anhydride grafted polyolefin and
3-6 wt% clay nanofiller
for the production of articles having the following properties:
a flexural modulus according to ISO 178 of at least 1700 MPa
a tensile modulus according to ISO 527-2 of at least 1650 MPa,
a heat distortion temperature according to ISO 75 of at least 100 °C.
a haze of no more than 20 % determined according to ASTM D 1003-95.

In a preferred embodiment the semicrystalline polyolefin is polypropylene. This polypropylene has a preferred MFR of 1 to 10 g/10 min.

The maleic anhydride grafted polyolefin preferably is a maleic anhydride grafted ethylene propylene block copolymer with an ethylene content of from 3 to 25 wt % and an MFR of from 40 to 60 g/10 min.

In a particularly preferred embodiment of the present invention the polypropylene composition is comprised of 92 wt% of polypropylene, 3 wt% maleic anhydride grafted polypropylene and 5 wt% of clay nanofiller.

As nanofiller the commercially available clay nanofiller "Cloisite 6A", which is available from Southern Clay Products Inc., 1212 Church Street, Gonzales TX 78629, USA, was used. This clay nanofiller is a bentonite (or montmorillonite) which is intercalated and functionalized with alkyl quarternary ammonium ions.

According to a further preferred embodiment the articles show a haze of no more than 18 %.

It is further preferred, that articles according to the present invention show an ignition time determined according to ISO 5660 of at least 50 seconds.

In addition, it is preferred that articles according to the present invention show a burning time determined according to ISO 5660 of at least 300 seconds. Both aforementioned embodiments make it possible that articles according to the invention are utilized in areas where flame retardancy is important.

It was possible to achieve not only an improved balance of mechanical, thermomechanical and optical properties, but also an improvement in flame retardancy and burning behavior.

The articles according to the present invention are advantageously utilizable for engineering applications, e.g. for automotive parts, where the above described properties-combination is required.

### TEST METHODS

The melt flow rates were measured with a load of 2.16 kg and at 230 °C. The melt flow rate (MFR) is that quantity of polymer in grams which the test apparatus standardized to DIN 53 735 extrudes within 10 minutes at a temperature of 230 °C under a weight of 2.16 kg.

The flexural modulus was determined according to ISO 178.

The tensile modulus was determined according to ISO 527-2.

The heat distortion temperature (HDT) was determined according to ISO 75.

Haze was determined according to ASTM D 1003-95.

Ignition time and burning time were both determined according to ISO 5660.

### Examples:

The materials were premixed together in a dry state and melt-extruded in conventional twin-screw extruder.

**Table 1:**

| SAMPLE No. | | 1 | 2 | 3 | 4 |
|---|---|---|---|---|---|
| Notes | | Invention | 10 wt% MAH-PP | 5% talc | Polypropylene homopolymer |
| Base polymer (Sample No.) | | 4 | 4 | 4 | |
| MFR of base polymer | [g/10 min] | 7,2 | 7,2 | 7,2 | 7,2 |
| MFR of composition | [g/10 min] | 4,8 | 6,1 | 6,7 | |
| | | | | | |
| Flex. Mod. | [MPa] | 1790 | 1590 | 1710 | 1470 |
| Tensile Mod. | [MPa] | 1710 | 1610 | 1760 | 1520 |
| Charpy, unnotched, -20C | [kJ/m²] | 14,6 | 15,4 | 16,4 | 19 |
| Charpy, notched 23 C | [kJ/m²] | 5,2 | 4,4 | 4 | 4,3 |
| HDT/B (0,45 MPa) | [°C] | 101,5 | 89 | 107 | 89,5 |
| Haze | [%] | 17,1 | 17,6 | 27 | 37,9 |
| Gloss | [%] | 105,5 | 101 | 101 | 86,4 |
| Oxygen permeation (25micro) | [ml/m².24h] | 3342 | 2924 | 3980 | 3393 |
| | | | | | |
| Cone Calorimeter data | | | | | |
| T_{ign}. | [s] | 57 | 42 | 62 | 51 |
| T_{b} | [s] | 318 | 245 | 231 | 312 |
| HRR(max) | [kW/m²] | 816 (low std) | 835 | 1016 | 1153 (high std) |
| HRR(ave) | [kW/m²] | 341 | 452 | 448 | 369 |

It can be seen from table 1, that in an attempt to achieve better mechanical and thermomechanical values for a propylene homopolymer (sample 4), an addition of 5 wt% talc can be used (sample 3). This however, leads to an unsatisfactory haze of the composition. When talc is replaced by 5 wt% clay nanofiller plus 10 wt% maleic anhydride grafted polypropylene (sample 2) mechanical properties are reduced, but haze is satisfactory.

A reduction of the maleic anhydride grafted polypropylene (MAH-PP) down to 3 wt% results in a polymer composition with mechanical and thermomechanical properties comparable to a conventionally filled material, but with superior transparency and better flame retardancy. Also, oxygen permeation properties are superior to a conventionally filled material, which makes this material applicable for food packaging.

## Claims

1. Use of a polymer material comprising a polyolefin composition which is comprised of
90-95 wt% of a semicrystalline polyolefin
2-4 wt% of a maleic anhydride grafted polyolefin and
3-6 wt% clay nanofiller
for the production of articles with an improved balance of mechanical, thermomechanical and optical properties and which exhibit the following properties:
a flexural modulus according to ISO 178 of at least 1700 MPa
a tensile modulus according to ISO 527-2 of at least 1650 MPa,
a heat distortion temperature according to ISO 75 of at least 100 °C.
a haze of no more than 20 % determined according to ASTM D 1003-95.

2. Use according to claim 1, **characterized in that** the semicrystalline polyolefin is polypropylene.

3. Use according to any one of claims 1 or 2, **characterized in that** the maleic anhydride grafted polyolefin is a maleic anhydride grafted ethylene propylene block copolymer with an ethylene content of from 3 to 25 wt% and an MFR of from 40 to 60 g/10 min.

4. Use according to any one of claims 1 to 3, **characterized in that** the articles show a haze of no more than 18 %.

5. Use according to any one of claims 1 to 4, **characterized in that** the articles show an ignition time determined according to ISO 5660 of at least 50 seconds.

6. Use according to any one of claims 1 to 5, **characterized in that** the articles show a burning time determined according to ISO 5660 of at least 300 seconds.

7. Use according to any one of claims 1 to 6 for the production of automotive parts, electrical appliances, wire and cable, and pipe products.
